# EUROPEAN PATENT APPLICATION

(11) **EP 4 851 621 A1**
(43) Date of publication of application: **09.12.2026**
(21) Application number: 25181166.7
(22) Date of filing: 05.06.2025
(51) Int. Cl.: G01N 30/16, B01D 15/18, G01N 30/20, G01N 30/24, G01N 30/38, G01N 30/46, G01N 30/88

(54) **METHOD FOR OPERATING A VALVE SWITCHING CASSETTE IN A BIOPROCESS INSTALLATION FOR PERFORMING A DOWNSTREAM PROCESS FOR THE PURIFICATION OF A TARGET PRODUCT**

(71) Applicant: Sartorius Stedim Biotech GmbH, 37079 Göttingen (DE)
(72) Inventor: Lobedann, Martin, 37079 Göttingen (DE); Pelella, Fabrizio, 50012 Antella (Firenze) (IT)
(74) Representative: Gottschald Patentanwälte Partnerschaft mbB

(57) **Abstract**

The invention relates to a method for operating a valve switching cassette (1) in a bioprocess installation (2) for performing a downstream process for the purification of a target product, wherein the method comprises transferring feedstreams (19) to at least one downstream process component (9), wherein the method comprises introducing the feedstreams (19) into one or more primary ports (5) as inlet ports (20) of a fluid network (4) and transferring the feedstreams (19) through the fluid network (4) to the at least one downstream process component (9). It is proposed that the number of feedstreams (19) is larger than the number of inlet ports (20) and that at least one inlet port (20) is used at least two feedstreams (19).

## Description

The present invention relates to a method for operating a valve switching cassette in a bioprocess installation for performing a downstream process for the purification of a target product according to the general part of claim 1, to a bioprocess installation for purifying a target product in a downstream process according to the general part of claim 16 and to a process unit for controlling a bioprocess installation according to claim 17.

The expression "bioprocess" presently represents any kind of biotechnological process, in particular biopharmaceutical processes. The operation of a plurality of chromatography columns, that are connected to a valve switching cassette for performing a simulated moving bed chromatography, may be part of such a bioprocess.

The known prior art US 2023/294016 A1 that builds the basis of the invention is related to a method for operating a valve switching cassette in a bioprocess installation for performing a downstream process for the purification of a target product. This bioprocess installation used in the method comprises a valve switching system comprising the valve switching cassette, wherein the valve switching cassette comprises at least one fluid network of ports and fluid lines, which includes primary ports, communicating with primary fluid lines, and secondary ports, communicating with secondary fluid lines. Furthermore, the valve switching cassette comprises switchable valve units for selectively interconnecting the primary fluid lines of the fluid network with the secondary fluid lines of the fluid network via transfer fluid lines. For switching the switchable valve units, the valve switching system comprises a switching device in the form of an actuator block.

The known bioprocess installation comprises groups of downstream process components, wherein each group of downstream process components is assigned to one or more unit operations of the downstream process. Each downstream process component of each group of downstream process components is fluidly connected to the fluid network of the valve switching cassette. The unit operations comprise a first unit operation, for example, in the form of an isolation unit operation, and a second unit operation, for example, in the form of a purification unit operation. A group of different feedstreams must necessarily be assigned to each unit operation. In order to achieve the conduction of product isolation and purification, the method necessarily comprises transferring each feedstream to at least one downstream process component of the respective group of downstream process components which includes introducing the feedstreams into one or more primary ports as inlet ports of the fluid network and transferring the feedstreams through the fluid network to the at least one downstream process component of the respective unit operation.

The described bioprocess installation comprising a valve switching cassette which works in conjunction with an actuator block has established itself on the market and is used in a wide range of processes, for example, in clinical and commercial multi-column chromatography operations.

However, as the number of feedstreams to be introduced into the primary ports is equal to the number of primary ports, the known method is limited, as each feedstream can only be introduced into one primary port as inlet port being assigned to the respective feedstream. Therefore, the number of unit operations, which can be performed for a given downstream process and/or the number of process steps, which can be performed per unit operation, such as the number of washing steps, loading or equilibration steps, directly correlates with the number of inlet ports. As a result, the number of inlet ports is a restricting factor, which has to be considered when establishing a given downstream process. It has been noticed that often, slots for downstream process components, usually columns, remain unused.

It is an object of the present invention to provide a method that allows a more flexible operation of a valve switching cassette.

The above-noted object is solved by the features of the characterizing part of claim 1.

The main realization of the present invention is that the number of process steps and unit operations can be increased for a given valve switching cassette, when in total more feedstreams than available inlet ports can be introduced into the inlet ports. That is possible because often, not all feedstreams and therefore inlet ports are used at the same time.

In detail, it is proposed that the number of feedstreams is larger than the number of inlet ports and that at least one inlet port is used for at least two feedstreams.

In one embodiment, a sequential introduction of at least two different feedstreams of the first unit operation into one inlet port assigned to the first unit operation (claim 2) allows increasing the number of process steps required for performing the first unit operation, such as the number of washing or cleaning steps in a chromatography step, as a first unit operation.

According to a preferred embodiment of claim 3, the bioprocess installation comprises an inlet valve for introducing a feedstream into the inlet port assigned to the first unit operation, which allows switching between two different feedstreams for the inlet port. A bioprocess installation that comprises multiple inlet valves for introducing a feedstream into the inlet port assigned to the first unit operation also allows introducing two or more different feedstreams into the inlet port in a very simple manner.

According to a preferred embodiment of claim 4, the valve switching cassette comprises a first and a second fluid network wherein the first fluid network is fluidly connectable with the second fluid network. This is a preferred embodiment increasing the flexibility of the use cases of the switchable valve cassette.

Claim 5 refers to a preferred embodiment of the method comprising introducing at least two different feedstreams of the second unit operation into different inlet ports assigned to the second unit operation.

Claim 6 refers to preferred unit operations. A simulated moving bed chromatography step as a first unit operation may result in a higher process productivity due to its continuous nature and due to overloading conditions of the chromatographic medium, which may lead to reduced product costs.

Treating the first and the second unit operation different by introducing several feedstreams of the first unit operation into the same inlet port while using several inlet ports for the second unit operation is especially useful if the unit operations are different, for example, as in a preferred embodiment according to claim 6, if the first unit operation is a flow through chromatography and the second unit operation is a simulated moving bed chromatography.

Claim 7 refers to a preferred embodiment of the bioprocess installation which comprises at least one fluid transportation device. A pump as a fluid transportation device that is free of pistons (claim 8) reduces the number of gaps, such as gaps between a pump piston and a pump cylinder, which may simplify a cleaning in place (CIP) process. Furthermore, a piston-free pump may reduce the risk of contaminating a feedstream with microorganisms or viruses harbored within such gaps and may also eliminate the risk of contaminating a feedstream with cylinder lubricants.

According to claim 9, the bioprocess installation and/or the valve switching cassette comprises at least one aseptic connector for aseptic connection of the valve switching cassette, which allows easily connecting further devices, such as chromatography columns or tubing, to the valve switching cassette. Furthermore, the aseptic connectors allow setting up a desired downstream process with a lower risk of contamination, which enables meeting the strict requirements of regulatory authorities for the production of biopharmaceuticals.

The embodiments of claims 7 to 9 each enable increasing the sterility of the process by further closing off the fluid network from its surroundings which is especially important for GMP-type processes and long-running processes. Introducing two feedstreams into one inlet port also makes it possible to use one feedstream for priming and the other to introduce a target product, without having to disassemble a connection to the input port, further moving towards a possibly fully closed process.

Claim 10 refers to embodiments wherein the bioprocess installation comprises a flow meter for measuring the volumetric and/or mass flow rate of at least one of the feedstreams. In preferred embodiments, the flow meter is located upstream the fluid transportation device, which may result in a more accurate measurement of the volumetric and/or mass flow rate as the flow of the feedstreams is less influenced by elements causing flow resistance arranged downstream of the fluid transportation device and the fluid transportation device itself, such as the fluid lines or the valve units of the valve switching cassette.

According to claim 11, the bioprocess installation and/or the valve switching cassette comprises a pressure sensor that enables monitoring and controlling the feedstream pressure and allows for timely interventions and adjustments to maintain optimal operating conditions.

Claim 12 refers to the preferred locations of the primary and secondary ports. Locating all the primary ports and/or all the secondary ports of the valve switching cassette in peripheral regions on opposing sides of the valve switching cassette may result in an easy connection of further devices, such as chromatography columns, to the valve switching cassette, as the peripheral regions may easily be accessible even in a mounted state of the valve switching cassette. Furthermore, as all the primary ports and/or all the secondary ports are located on opposing sides, an increase in flow resistance caused by a bending of tubing used for connecting further devices may be prevented.

Locating primary ports and secondary ports on different sides of the valve switching cassette promotes a clear segregation of the primary and secondary ports, which allows a spatial-functional assignment of supply and discharge ports and for connection of downstream process components, such as chromatography columns.

Claim 13 refers to preferred embodiments in which the downstream process components of the groups of downstream process components are fluidly connected between two fluid networks. In this way, streams entering the downstream process components and streams leaving the downstream process components can be routed through different fluid networks.

In a preferred embodiment according to claim 14, the valve switching cassette is germ-reduced or sterilized prior to use, which allows setting up a germ-reduced or even germ-free downstream process. If the valve switching cassette is already germ-reduced or sterilized by a manufacturer and packed in a germ-reduced or sterilized packaging, no germ-reduction process needs to be performed by the end user. Furthermore, the end user may benefit from a reduced documentation effort, as, for example, no documentation of the germ-reduction or sterilization process is required.

According to a preferred embodiment of claim 15, the downstream process is a connected downstream process. Such a connected downstream process enables a continuous processing of the target product without the need for manual intervention or interruption, resulting in process intensification and reduced risk of contamination.

Another teaching according to claim 16, which is of equal importance, relates to a bioprocess installation for purifying the target product in a downstream process.

Here, it is essential that the number of feedstreams is larger than the number of inlet ports and that the bioprocessing installation is configured to use at least one inlet port for at least two feedstreams.

All explanations given with regard to the method are fully applicable.

Another teaching according to claim 17, which is of equal importance, relates to a process unit for controlling a bioprocess installation according to claim 16.

All explanations given with regard to the method and the bioprocess installation are fully applicable.

In the following, embodiments of the invention are explained with respect to the drawing. The drawing shows in
- Fig. 1: a bioprocess installation with a proposed valve switching cassette for performing a downstream process for purifying a target product and
- Fig. 2: a sectional view of the proposed valve switching cassette in the area of a switchable valve unit.

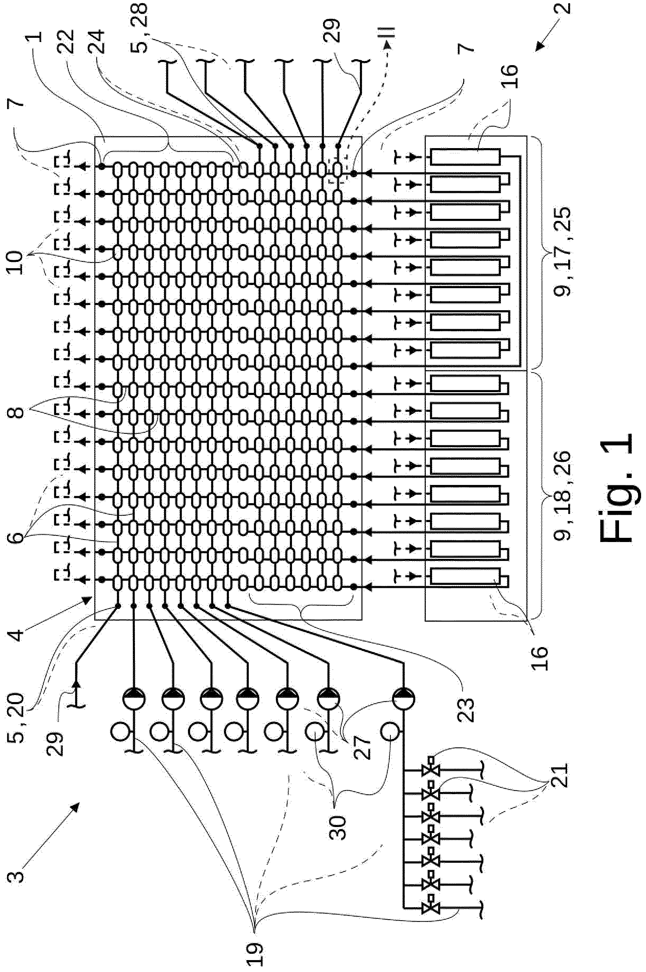

Proposed is a method for operating a valve switching cassette 1 in a bioprocess installation 2 for performing a downstream process for the purification of a target product. The term "bioprocess" as used herein represents any kind of biotechnological process and in particular biopharmaceutical processes. A target product may be any desired product and may be a protein, in particular an antibody, and/or, a nucleic acid, such as a deoxyribonucleic acid or a ribonucleic acid. The target product may be a virus, such as an adeno-associated virus. As shown in Fig. 1, the bioprocess installation 2 comprises a valve switching system 3 comprising the valve switching cassette 1. The valve switching cassette 1 comprises at least one fluid network 4 of ports and fluid lines, which includes primary ports 5, communicating with primary fluid lines 6, and secondary ports 7, communicating with secondary fluid lines 8.

The term "port" represents an interface for connecting downstream process components 9 of the bioprocess installation 2 to the respective fluid line. It may include a fluid connector to the respective fluid line. The expression "line" represents any longitudinal volume, that may hold and guide a fluid between two locations. The fluid lines may be drilled or otherwise machined into the valve switching cassette 1, such as by deep hole drilling or the like. Preferably, the valve switching cassette 1 comprises a one-piece valve switching cassette body into which the fluid lines are drilled. Preferably, the valve switching cassette 1 comprises or consists of a USP class VI compliant material, such as polytetrafluoroethylene, fluorinated ethylene propylene, ethylene tetrafluoroethylene, polyvinylidene fluoride, polypropylene, polyether ether ketone, polysulfone.

The valve switching cassette 1 further comprises switchable valve units 10 for selectively interconnecting the primary fluid lines 6 of the fluid network 4 with the secondary fluid lines 8 of the fluid network 4 via transfer fluid lines 11. The expressions "primary" and "secondary" are used to differentiate between the two groups of ports to be interconnected by the valve units via the fluid lines, as shown in Fig. 1. However, the expressions "primary" and "secondary" neither imply nor exclude a constructional and/or functional difference between the respective ports and fluid lines.

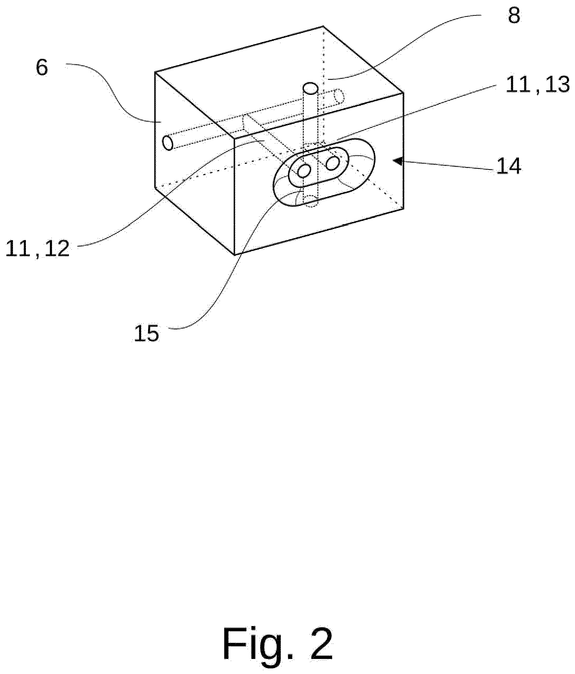

Fig. 2 shows a section of a preferred embodiment of the switchable valve unit 10, which comprises a first transfer fluid line 12 and a second transfer fluid line 13, each preferably being drilled in the valve switching cassette 1. Furthermore, the switchable valve unit 10 here and preferably comprises a receiving space 14 for a valve membrane, which may be carved out of the valve switching cassette 1, and the valve membrane (not shown). As can be seen in Fig. 2, a primary fluid line 6 is fluidly connected with the receiving space 14 via the first transfer fluid line 12 and a secondary fluid line 8 is fluidly connected with the receiving space 14 via the second transfer fluid line 13. In an operational state of the valve switching unit the valve membrane is sealingly attached to the surface of the valve switching cassette 1 on which the receiving chamber is located and placed above the receiving space 14 (not shown).

The valve membrane is switchable between a closed position and an opened position. In the closed position the valve membrane is in sealing contact with a valve base 15 of the receiving space 14, thereby preventing a transfer of fluid between the illustrated primary and secondary fluid lines via the first and second transfer fluid lines. In the opened position the valve membrane is not in sealing contact with the valve base 15 thereby allowing an exchange of fluid between the illustrated primary and secondary fluid line 8 via the first and second transfer fluid lines. The valve switching cassette 1 may comprise at least one of the aforementioned preferred embodiment of the switchable valve unit 10. Preferably, all switchable valve units 10 of the valve switching cassette 1 are configured as the aforementioned preferred embodiment of the switchable valve unit 10.

The valve switching system 3 comprises a switching device for switching at least one switchable valve unit 10 (not shown). The term "switching device" refers to any device being suitable for switching the valve membrane between the opened and closed position. Here and preferably, the switching device comprises a working medium, in particular a pneumatic and/or hydraulic fluid as working medium, for switching the valve membrane between the closed and opened position. The switching device may comprise an actuator for switching at least one switchable valve unit 10. Preferably the switching device comprises an actuator for each valve unit of the valve switching cassette 1. The actuator may act on the valve membrane in order to switch the valve membrane between the opened position and the closed position. Preferably, the actuator is actuated by the working fluid. Preferably, the working medium acts directly on the valve membrane for switching the valve membrane.

As shown in Fig. 1 the bioprocess installation 2 comprises groups of downstream process components 9, wherein each group of downstream process components 9 is assigned to one or more unit operations of the downstream process. A downstream process component 9 may be any device that is required for performing the unit operation. Preferably, the downstream process component 9 is fluidly connected to a port, in particular, to a secondary port 7 of the valve switching cassette 1. The downstream process component 9 may be connected to a port via tubing. Unit operations are basic process steps for reaching a certain physical and/or chemical change of a fluid to be processed in the downstream process. Mostly, the unit operations result in an enrichment and/or in an increased purity of the target product. Examples for common unit operations are filtration steps, virus inactivation steps and/or chromatography steps. A downstream process component 9 may, for example, be a sterile filter, a bag filter, a depth filter, a, in particular stirred, vessel, or a chromatography column 16.

As illustrated in Fig. 1, each downstream process component 9 of each group of downstream process components 9 is fluidly connected to the fluid network 4 of the valve switching cassette 1. The unit operations comprise a first unit operation 17 and a second unit operation 18, wherein a group of different feedstreams 19 is assigned to each unit operation.

The proposed method comprises transferring each feedstream 19 to at least one downstream process component 9 of the respective group of downstream process components 9. Furthermore, the method comprises introducing the feedstreams 19 into one or more primary ports 5 as inlet ports 20 of the fluid network 4 and transferring the feedstreams 19 through the fluid network 4 to the at least one downstream process component 9 of the respective unit operation. At this point, it should be made clear that the term "feedstream" refers to any fluid that is inputted into a port of the valve switching cassette 1 from a source external to the valve switching cassette 1 and guided through the fluid network 4. A feedstream 19 which has left the fluid network 4 and which is then directly reintroduced in the fluid network 4 is not regarded as a feedstream 19 as it lacks an external source. This applies to the uppermost primary port on the left side of the valve switching cassette 1 which is directly connected to the lowermost primary port on the right side of the valve switching cassette 1, as will be explained.

Essential, and as shown in Fig. 1, is that the number of feedstreams 19 is larger than the number of inlet ports 20 and that at least one inlet port 20 is used for at least two feedstreams 19. These at least two feedstreams 19 entering said inlet port 20 stem, as explained, from sources external to the valve switching cassette 1. The source of each of the two feedstreams 19 is preferably a vessel. For connecting the two feedstreams 19 to said inlet port 20, the bioprocess installation 2 preferably comprises a tube connected to said inlet port 20. The tube preferably branches into at least two tubes, which may be connected to said tube, for example through valves, as will be explained. Each of said at least two tubes may be used, preferably only, for one of the at least two feedstreams 19 and may be connected, directly or indirectly, to the source of the respective feedstream 19.

For example, introducing two feedstreams 19 differing in their compositions simultaneously into one inlet port 20 allows creating a combined feedstream 19 with desired properties based on the compositions and flow rates of both feedstreams 19. This, for example, allows performing an inline dilution of one of the two feedstreams 19 and creating a combined feedstream 19 with a composition that changes in its properties over the course of the downstream process such that a step elution or a gradient elution in a chromatography step as unit operation may be performed.

The method preferably comprises sequentially introducing at least two, preferably at least three, more preferably at least four, different feedstreams 19 of the first unit operation 17 into one inlet port 20 assigned to the first unit operation 17. In this regard, it is preferred that the method comprises sequentially introducing all feedstreams 19 of the first unit operation 17 into one inlet port 20 assigned to the first unit operation 17. This allows efficient operation of the first unit operation 17 with regard to the valve switching cassette resources.

As can be seen in Fig. 1, it is preferably the case that the bioprocess installation 2 comprises an inlet valve 21 for introducing a feedstream 19 or at least two feedstreams 19 into the inlet port 20 assigned to the first unit operation 17, and, that the inlet valve 21 is fluidly connected to the inlet port 20 assigned to the first unit operation 17. Preferably, and as also shown in Fig. 1, the bioprocess installation 2 comprises multiple inlet valves 21 for introducing a feedstream 19 into the inlet port 20 assigned to the first unit operation 17 and each of the multiple inlet valves 21 is fluidly connected to the inlet port 20 assigned to the first unit operation 17. This allows to simply introduce different feedstreams 19 sequentially into the inlet port 20 assigned to the first unit operation 17 and to easily assign all feedstreams 19 of the first unit operation 17 to this inlet port 20. Furthermore, this allows to easily adapt the number of feedstreams 19 to the requirements of a given first unit operation 17 as the number of inlet valves 21 being fluidly connected to the inlet port 20 assigned to the first unit operation 17 can easily be extended or reduced.

According to one embodiment it is proposed, that the valve switching cassette 1 comprises a first fluid network 22 of ports and fluid lines, which includes primary ports 5, communicating with primary fluid lines 6, and secondary ports 7, communicating with secondary fluid lines 8.

Alternatively, or in addition, the valve switching cassette 1 may comprise a second fluid network 23 of ports and fluid lines, which includes primary ports 5, communicating with primary fluid lines 6, and secondary ports 7, communicating with secondary fluid lines 8, which is fluidly connectable with the second fluid network 23, in particular via interruption valve units 24. The term "interruption valve unit" as used herein refers to any valve that allows separating a given fluid line into two separated fluid lines in order to prevent any exchange of substances between the two separated fluid lines. Each of the two separated fluid lines is then assigned to one separate fluid network 4 of the fluid networks 4. This situation is now explained exemplarily for the first vertical fluid line from the left in Fig. 1. When the first interruption valve unit 24 from the left is in a closed state, said vertical fluid line is separated into two separated fluid lines - a secondary fluid line 8 which is located above said interruption valve unit 24 and which is assigned to the first fluid network 22 and a secondary fluid line 8 which is located below said interruption valve unit 24 and which is assigned to the second fluid network 23 are created.

A preferred embodiment of the valve switching cassette 1 comprising the first fluid network 22 and the second fluid network 23 is illustrated in Fig. 1. As shown, the valve switching cassette 1 comprises the interruption valve units 24, which are horizontally arranged, here approximately halfway up the cassette. The first fluid network 22 of ports and fluid lines is here arranged above the interruption valve units 24, whereas the second fluid network 23 of ports and fluid lines is arranged below the interruption valve units 24. The interruption valve units 24 preferably interrupt all secondary fluid lines 8.

Here and preferably, the method comprises introducing at least two, preferably at least three, more preferably at least four, different feedstreams 19, in particular all feedstreams 19, of the second unit operation 18 into different inlet ports 20 assigned to the second unit operation 18.

As illustrated in Fig. 1 the first unit operation 17 preferably comprises a first chromatography step 25 involving a first chromatography medium. Alternatively, or in addition, the second unit operation 18 may comprise a second chromatography step 26 involving a second chromatography medium. The possibility to run two different unit operations, in particular two different chromatography steps as unit operations, on one valve switching cassette 1 may ultimately result in a net saving in terms of footprint and consumable costs.

The first chromatography step 25 and/or the second chromatography step 26 may be a capture step or a polishing step. The first chromatography medium and/or the second chromatography medium may be a cation exchange chromatography medium, an anion exchange chromatography medium, a hydrophobic chromatography medium, a mixed-mode chromatography medium or an affinity chromatography medium. The affinity chromatography medium may comprise an immunoglobulin binding protein such as protein A. Preferably, the second chromatography medium is an affinity chromatography medium and the first chromatography medium is a cation exchange chromatography medium or an anion exchange chromatography medium, which allows an efficient removal of impurities, thereby resulting in a high purity of the target product. In some embodiments, the first chromatography medium and/or the second chromatography medium may be an affinity chromatography medium which specifically binds host cell proteins of mammalian cells. The first chromatography medium and/or the second chromatography medium may be a particulate chromatography medium and/or a membrane chromatography medium. In some embodiments the first chromatography step 25 and/or the second chromatography step 26 are performed in bind and elute mode or in flow through mode. Preferably, the first chromatography step 25 is a flow through chromatography step. In other embodiments the first chromatography step 25 and/or the second chromatography step 26 may be a displacement chromatography step.

It is preferred that the second chromatography step 26 is a simulated moving bed chromatography step. Here and preferably, the first chromatography step 25 is a polishing step performed in flow through mode and the second chromatography step 26 is a simulated moving bed chromatography step. As the flow through chromatography step can be performed with one or few inlet ports 20 while the simulated moving bed chromatography step needs several parallel feedstreams 19, the preferred split of the inlet ports 20 allows using the valve switching cassette 1 for both in parallel.

To facilitate the understanding of the bioprocess installation 2 as shown in Fig. 1, a possible pathway of a feedstream 19 is explained in the following on basis of an exemplary feedstream 19, which is introduced into the second upper primary inlet port 20 of the first fluid network 22 on the left-hand side of the valve switching cassette 1. After its introduction, the exemplary feedstream 19 fills the primary fluid line 6 assigned to the second upper primary inlet port 20 on the left-hand side of the valve switching cassette 1. By switching the leftmost switchable valve unit 10 assigned to now filled primary fluid line 6 of the first fluid network 22 to an open state, the exemplary feedstream 19 enters the leftmost vertical secondary fluid line 8 and leaves the first fluid network 22 via the leftmost secondary port 7 located on the top of the valve switching cassette 1. Next, the exemplary feedstream 19 enters a first chromatography column 16 of the second chromatography step 26 comprising the second chromatography medium, which is fluidly connected between the leftmost secondary port 7 of the first fluid network 22 and the leftmost secondary port 7 of the second fluid network 23. After passing the first chromatography column 16 of the second chromatography step 26, the exemplary feedstream 19 enters the leftmost vertical secondary fluid line 8 of the second fluid network 23 via the leftmost secondary port 7 of the second fluid network 23. By switching the leftmost bottom switchable valve unit 10 assigned to now filled secondary fluid line 8 of the second fluid network 23 to an open state, the fluid enters the bottom primary fluid line 6 of the secondary fluid network 23. In the here explained scenario, all interruption valve units 24 are in a closed state thereby separating the fluid network 4 into the first fluid network 22 and the second fluid network 23. Now, depending on a switching state of the different valves, the exemplary feedstream 19 can be directed back into the first fluid network 22, to another chromatography column 16 or be discharged from the valve switching cassette 1.

However, in order to perform the aforementioned simulated moving bed chromatography step as second unit operation 18, the exemplary feedstream 19 may, after passing the first chromatography column 16 of the second chromatography step 26 and entering the second fluid network 23, directly be directed into a second chromatography column 16 of the second chromatography step 26 comprising the second chromatography medium (e.g. the second chromatography column 16 from the left). After reaching a predefined loading state of the first chromatography column 16 of the second chromatography step 26, the exemplary feedstream 19 introduced into the second upper primary inlet port 20 of the first fluid network 22 on the left-hand side of the valve switching cassette 1 may be directed directly to the second chromatography column 16 of the second chromatography step 26. The feedstream 19 leaving the second chromatography column 16 of the second chromatography step 26 may then be directed to a third chromatography column 16 of the second chromatography step 26 comprising the second chromatography medium.

The bioprocess installation 2 may comprise at least one fluid transportation device, in particular a pump 27, for introducing at least one of the feedstreams 19 into one of the inlet ports 20. Preferably, and as shown in Fig. 1 the bioprocess installation 2 comprises multiple fluid transportation devices, each of them being assigned to one of the inlet ports 20.

The pump 27 may be any type of pump 27 known by a person skilled in the art. However, it is preferred that the pump 27 is free of pump pistons. Most preferably the pump 27 is a membrane pump or a peristaltic pump. In other embodiments the pump may be a piston membrane pump.

According to one embodiment it is proposed, that the bioprocess installation 2 and/or the valve switching cassette 1 comprises at least one aseptic connector for aseptic connection of the valve switching cassette 1. An aseptic connector allows connecting downstream process components 9 with low or even no risk of contamination intake into the downstream process, which may enable a contamination-free downstream process to be carried out. This is particularly advantageous as increasingly longer bioprocess run times mean that even minimal microbial or viral contamination at the beginning of the downstream process may result in such strong growth that the downstream process has to be terminated, or, that the finally obtained target product is noncompliant with regulatory requirements. Aseptic connections can therefore help to achieve the goal of a bioburden-free downstream process.

Fig. 1 shows that the bioprocess installation 2 and/or the valve switching cassette 1 preferably comprises multiple aseptic connectors, and, that each of the aseptic connectors is fluidly connected to one of the inlet ports 20 for aseptic introduction of at least one of the feedstreams 19 in the inlet port 20.

It is preferred that the method comprises discharging the feedstreams 19 out of one or more primary ports 5 as outlet ports 28 from the fluid network 4, that the bioprocess installation 2 and/or the valve switching cassette 1 comprises further aseptic connectors, and, that each of the further aseptic connectors is fluidly connected to one of the outlet ports 28 for aseptic discharge of the feedstreams 19 from the outlet ports 28.

According to an embodiment a feedstream 19 introduced into the fluid network 4 may be discharged from the fluid network 4 via a one of the outlet ports 28 and directly be re-introduced as a bypass-feedstream into the fluid network 4. The bioprocess installation 2 may comprise a bypass-tubing 29 for interconnecting, in particular directly interconnecting, a port, in particular a primary port, of the second fluid network 23 with a port, in particular a secondary port 7, of the first fluid network 22. In this regard, it is made clear, that the bypass-feedstream is not a feedstream 19 of the number of feedstreams 19 being larger than the number of inlet ports 20. Consequently, the primary port connected to the bypass-tubing 29 is not an inlet port 20.

Here and preferably, and as shown in Fig. 1, the aforementioned exemplary feedstream 19 may, after performing the second unit operation 18, here the second chromatography step 26 as second unit operation 18, be discharged from the second fluid network 23 via a one of the outlet ports 28 and re-introduced as a bypass-feedstream into the first fluid network 22 via the bypass-tubing 29. The exemplary feedstream 19 may then be transferred through the first fluid network 22 to the downstream process components 9 of the first unit operation 17 in order to perform the first unit operation 17, here the first chromatography step 25 as the first unit operation 17.

The bioprocess installation 2 may further comprise a flow meter 30 for measuring the volumetric and/or mass flow rate of at least one of the feedstreams 19. As shown in Fig. 1 the flow meter 30 is preferably located upstream of the fluid transportation device. This is in particular advantageous when a peristaltic pump is used as fluid transportation device, as a peristaltic pump tends to produce undesired flow rate deviations. By locating the volumetric and/or mass flow meter 30 upstream the fluid transportation the flow meter 30 is less effected by the flow rate deviations thereby resulting in a more accurate measured volumetric and/or mass flow.

As shown in Fig. 1, the bioprocess installation 2 comprises multiple flow meters 30. Preferably, each of the flow meters 30 is assigned to one of the inlet ports 20 and configured to measure the volumetric and/or mass flow rate of a feedstream 19 introduced in the respective inlet port 20.

According to one embodiment it is proposed, that the bioprocess installation 2 and/or the valve switching cassette 1 comprises a pressure sensor for measuring the pressure of at least one of the feedstreams 19. The bioprocess installation 2 may comprise multiple pressure sensors. It is preferred that each of the pressure sensors is assigned to one of the inlet ports 20, and, that each of the pressure sensors is configured to measure the pressure of a feedstream 19 introduced into the respective inlet port 20.

It is preferably the case that all the primary ports 5 of the valve switching cassette 1 are located in peripheral regions on opposing sides of the valve switching cassette 1. Alternatively, or in addition, all the secondary ports 7 may be located in peripheral regions on opposing sides of the valve switching cassette 1. In preferred embodiments, and as shown in Fig. 1, the primary ports 5 and the secondary ports 7 are located on different sides of the valve switching cassette 1. Here, all primary ports 5 of the first fluid network 22 are arranged on the left-hand side of the valve switching cassette 1, whereas all primary ports 5 of the second fluid network 23 are arranged on the right-hand side of the valve switching cassette 1. The secondary ports 7 of the first fluid network 22 are arranged at the top of the valve switching cassette 1 and the secondary ports 7 of the second fluid network 23 are arranged at the bottom of the valve switching cassette 1.

The downstream process components 9 of the groups of downstream process components 9 may, as illustrated in Fig. 1, be fluidly connected between two fluid networks 4, in particular between the first fluid network 22 and the second fluid network 23. As shown in Fig. 1, the downstream process components 9 are connected between the two fluid networks 4 via tubing. Preferably, all downstream process components 9 are connected between two fluid flow networks. As shown in Fig. 1, here and preferably, all chromatography columns 16 of the first unit operation 17 and of the second unit operation 18 as downstream process components 9 are connected between the first fluid network 22 and the second fluid network 23.

According to one embodiment it is proposed, that the valve switching cassette 1 is germ-reduced or sterilized, in particular germ-reduced or sterilized by a manufacturer, prior to use. Germ-reduction or sterilization may be performed by moist heat (autoclaving), ultraviolet light irradiation or gamma irradiation. Preferably, the germ-reduction or sterilization is performed by gamma irradiation. It is further proposed, that the valve switching cassette 1 is germ-reduced or sterilized prior to use and packaged in a germ-reduced or sterilized packaging, and, that the sterilization of the sterilized valve switching cassette 1 and the germ-reduced or sterilized packing is performed by a manufacturer. Alternatively, or in addition, all primary ports 5 and secondary ports 7 of the valve switching cassette 1 are closed prior to use, which may prevent, in particular after performing a germ-reduction or sterilization, dust and/or contamination from entering the valve switching cassette 1.

Preferably, the downstream process is a connected downstream process and/or a closed downstream process. Alternatively, or in addition, at least one of the feedstreams 19 may be derived from a perfusion cell culture or a fed batch cell culture, in particular a concentrated fed batch cell culture.

The term "connected downstream process" refers to a downstream process where all components of the bioprocess installation 2, such as the downstream process components 9 and the valve switching cassette 1, are linked to each other in such a way, that a product feedstream 19 comprising the target product flows continuously or semi-continuously from downstream process component 9 to the next downstream process component 9 and thereby from one unit operation to the next unit operation without manual intervention. The term "closed downstream process" is a process in which all components of the bioprocess installation 2 are connected to each other in such a way that target product is never exposed to the external environment.

The combination of a connected downstream process and a closed downstream process is, in particular, advantageous for perfusion cell cultures, as perfusion cell cultures require bioprocess run times of up to 3 weeks or more, thereby being prone to strong microbial growth of microbial and/or viral contamination. Furthermore, the combination of a connected downstream process and a closed downstream process would support usage of the valve switching cassette 1 under GMP conditions which may enable meeting the requirements of the regulatory authorities. As all components, such as the valve switching cassette 1, the downstream process components 9 or the fluid transportation devices, can be produced in small geometric dimensions, the aforementioned bioprocess installation 2 may support closed processing also at very small scale.

Another teaching which is of equal importance relates to a bioprocess installation 2 for purifying a target product in a downstream process, in particular for performing the proposed method, wherein the bioprocess installation 2 comprises a valve switching system 3 comprising a valve switching cassette 1, wherein the valve switching cassette 1 comprises at least one fluid network 4 of ports and fluid lines, which includes primary ports 5, communicating with primary fluid lines 6, and secondary ports 7, communicating with secondary fluid lines 8, wherein the valve switching cassette 1 comprises switchable valve units 10 for selectively interconnecting the primary fluid lines 6 of the fluid network 4 with the secondary fluid lines 8 of the fluid network 4 via transfer fluid lines 11, wherein the valve switching system 3 comprises a switching device for switching at least one switchable valve unit 10, wherein the bioprocess installation 2 comprises groups of downstream process components 9, wherein each group of downstream process components 9 is assigned to a unit operation of the downstream process, wherein each downstream process component 9 is fluidly connected to the fluid network 4 of the valve switching cassette 1, wherein the unit operations comprise a first unit operation 17 and a second unit operation 18, wherein the bioprocess installation 2 is configured to produce groups of different feedstreams 19, wherein a group of different feedstreams 19 is assigned to each unit operation, wherein the valve switching cassette 1 is configured to transfer each feedstream 19 to at least one downstream process component 9 of the respective group of downstream process components 9, wherein the bioprocess installation 2 comprises a fluid transportation device to introduce the feedstreams 19 into one or more primary ports 5 as inlet ports 20 of the fluid network 4.

According to one embodiment it is proposed, that the number of feedstreams 19 is larger than the number of inlet ports 20 and that the bioprocessing installation 2 is configured to use at least one inlet port 20 for at least two feedstreams 19.

Another teaching which is of equal importance relates to a process unit for controlling the proposed bioprocess installation 2.

The process unit may be configured to switch an inlet valve 21 for introducing a feedstream 19 into the inlet port 20 assigned to the first unit operation 17. The process unit may be configured to switch multiple inlet valves 21 for introducing a feedstream 19 into the inlet port 20 assigned to the first unit operation 17. Preferably, the process unit is further configured to control the switchable valve units 10 and/or the interruption valve units 24 and/or the fluid transportation device. This may allow controlling the direction and/or the flow path and/or the volumetric and/or mass flow rate of one, preferably of all feedstreams 19, of the valve switching cassette 1.

Therefore, the bioprocess installation 2 may further comprise a computer program comprising commands, which, when the program is executed by the process unit, cause the process unit to carry out the switching of one or more inlet valves 21 and/or one or more switchable valve units 10 and/or one or more interruption valve units 24 and/or to control one or more fluid transportation devices.

## Claims

1. Method for operating a valve switching cassette (1) in a bioprocess installation (2) for performing a downstream process for the purification of a target product, wherein the bioprocess installation (2) comprises a valve switching system (3) comprising the valve switching cassette (1), wherein the valve switching cassette (1) comprises at least one fluid network (4) of ports and fluid lines, which includes primary ports (5), communicating with primary fluid lines (6), and secondary ports (7), communicating with secondary fluid lines (8), wherein the valve switching cassette (1) comprises switchable valve units (10) for selectively interconnecting the primary fluid lines (6) of the fluid network (4) with the secondary fluid lines (8) of the fluid network (4) via transfer fluid lines (11), wherein the valve switching system (3) comprises a switching device for switching at least one switchable valve unit (10),
wherein the bioprocess installation (2) comprises groups of downstream process components (9), wherein each group of downstream process components (9) is assigned to one or more unit operations of the downstream process, wherein each downstream process component (9) of each group of downstream process components (9) is fluidly connected to the fluid network (4) of the valve switching cassette (1), wherein the unit operations comprise a first unit operation (17) and a second unit operation (18),
wherein a group of different feedstreams (19) is assigned to each unit operation,
wherein the method comprises transferring each feedstream (19) to at least one downstream process component (9) of the respective group of downstream process components (9), wherein the method comprises introducing the feedstreams (19) into one or more primary ports (5) as inlet ports (20) of the fluid network (4) and transferring the feedstreams (19) through the fluid network (4) to the at least one downstream process component (9) of the respective unit operation,
**characterized in**
**that** the number of feedstreams (19) is larger than the number of inlet ports (20) and that at least one inlet port (20) is used for at least two feedstreams (19).

2. Method according to claim 1, **characterized in that** the method comprises sequentially introducing at least two different feedstreams (19), in particular all feedstreams (19), of the first unit operation (17) into one inlet port (20) assigned to the first unit operation (17).

3. Method according to claim 2, **characterized in that** the bioprocess installation (2) comprises an inlet valve (21) for introducing a feedstream (19) into the inlet port (20) assigned to the first unit operation (17), and, that the inlet valve (21) is fluidly connected to the inlet port (20) assigned to the first unit operation (17), preferably, that the bioprocess installation (2) comprises multiple inlet valves (21) for introducing a feedstream (19) into the inlet port (20) assigned to the first unit operation (17), and, that each of the multiple inlet valves (21) is fluidly connected to the inlet port (20) assigned to the first unit operation (17).

4. Method according to one of the preceding claims, **characterized in that** the valve switching cassette (1) comprises a first fluid network (22) of ports and fluid lines, which includes primary ports (5), communicating with primary fluid lines (6), and secondary ports (7), communicating with secondary fluid lines (8), and, that the valve switching cassette (1) comprises a second fluid network (23) of ports and fluid lines, which includes primary ports (5), communicating with primary fluid lines (6), and secondary ports (7), communicating with secondary fluid lines (8), and, that the first fluid network (22) is fluidly connectable with the second fluid network (23), in particular via interruption valve units (24).

5. Method according to one of the preceding claims, **characterized in that** the method comprises introducing at least two different feedstreams (19), in particular all feedstreams (19), of the second unit operation (18) into different inlet ports (20) assigned to the second unit operation (18).

6. Method according to one of the preceding claims, **characterized in that** the second unit operation (18) comprises a second chromatography step (26) involving a second chromatography medium, preferably that the second chromatography step (26) is a simulated moving bed chromatography step, and/or, that the first unit operation (17) comprises a first chromatography step (25) involving a first chromatography medium, preferably, that the first chromatography step (25) is a flow through chromatography step.

7. Method according to one of the preceding claims, **characterized in that** the bioprocess installation (2) comprises at least one fluid transportation device, in particular a pump (27), for introducing at least one of the feedstreams (19) into one of the inlet ports (20), preferably, that the bioprocess installation (2) comprises multiple fluid transportation devices, and, that each of the fluid transportation devices is assigned to one of the inlet ports (20).

8. Method according to claim 5, **characterized in that** the pump (27) is free of pump pistons, preferably, that the pump (27) is a membrane pump or a peristaltic pump.

9. Method according to one of the preceding claims, **characterized in that** the bioprocess installation (2) and/or the valve switching cassette (1) comprises at least one aseptic connector for aseptic connection of the valve switching cassette (1), preferably, that the bioprocess installation (2) and/or the valve switching cassette (1) comprises multiple aseptic connectors, and, that each of the aseptic connectors is fluidly connected to one of the inlet ports (20) for aseptic introduction of at least one of the feedstreams (19) in the inlet port (20), and/or, that the method comprises discharging the feedstreams (19) out of one or more primary ports (5) as outlet ports (28) from the fluid network (4), that the bioprocess installation (2) and/or the valve switching cassette (1) comprises multiple aseptic connectors, and, that each of the aseptic connectors is fluidly connected to one of the outlet ports (28) for aseptic discharge of at least one of the feedstreams (19) from at least one of the outlet ports (28).

10. Method according to one of the preceding claims, **characterized in that** the bioprocess installation (2) comprises a flow meter (30) for measuring the volumetric and/or mass flow rate of at least one of the feedstreams (19), preferably, that the flow meter (30) is located upstream of the fluid transportation device, more preferably, that the bioprocess installation (2) comprises multiple flow meters (30), that each of the flow meters (30) is assigned to one of the inlet ports (20), and, that each of the flow meters (30) is configured to measure the volumetric and/or mass flow rate of a feedstream (19) introduced in the respective inlet port (20).

11. Method according to one of the preceding claims, **characterized in that** the bioprocess installation (2) and/or the valve switching cassette (1) comprises a pressure sensor for measuring the pressure of at least one of the feedstreams (19), preferably, that the bioprocess installation (2) comprises multiple pressure sensors, that each of the pressure sensors is assigned to one of the inlet ports (20), and, that each of the pressure sensors is configured to measure the pressure of a feedstream (19) introduced into the respective inlet port (20).

12. Method according to one of the preceding claims, **characterized in that** all the primary ports (5) of the valve switching cassette (1) are located in peripheral regions on opposing sides of the valve switching cassette (1), and/or, that all the secondary ports (7) are located in peripheral regions on opposing sides of the valve switching cassette (1), preferably, that the primary ports (5) and the secondary ports (7) are located on different sides of the valve switching cassette (1).

13. Method according to one of the preceding claims, **characterized in that** the downstream process components (9) of the groups of downstream process components (9) are fluidly connected between two fluid networks (4), in particular between the first fluid network (22) and the second fluid network (23).

14. Method according to one of the preceding claims, **characterized in that** the valve switching cassette (1) is germ-reduced or sterilized, in particular germ-reduced or sterilized by a manufacturer, prior to use, preferably, that the valve switching cassette (1) is germ-reduced or sterilized prior to use and packed in a germ-reduced or sterilized packaging, and, that the sterilization of the sterilized valve switching cassette (1) and the germ-reduced or sterilized packing is performed by a manufacturer, and/or, that all primary ports (5) and secondary ports (7) of the valve switching cassette (1) are closed prior to use.

15. Method according to one of the preceding claims, **characterized in that** the downstream process is a connected downstream process and/or a closed downstream process, and/or, that at least one of the feedstreams (19) is derived from a perfusion cell culture or a fed batch cell culture, in particular a concentrated fed batch cell culture.

16. Bioprocess installation for purifying a target product in a downstream process, in particular for performing a method according to the preceding claims, wherein the bioprocess installation (2) comprises a valve switching system (3) comprising a valve switching cassette (1), wherein the valve switching cassette (1) comprises at least one fluid network (4) of ports and fluid lines, which includes primary ports (5), communicating with primary fluid lines (6), and secondary ports (7), communicating with secondary fluid lines (8), wherein the valve switching cassette (1) comprises switchable valve units (10) for selectively interconnecting the primary fluid lines (6) of the fluid network (4) with the secondary fluid lines (8) of the fluid network (4) via transfer fluid lines (11), wherein the valve switching system (3) comprises a switching device for switching at least one switchable valve unit (10),
wherein the bioprocess installation (2) comprises groups of downstream process components (9), wherein each group of downstream process components (9) is assigned to a unit operation of the downstream process, wherein each downstream process component (9) is fluidly connected to the fluid network (4) of the valve switching cassette (1), wherein the unit operations comprise a first unit operation (17) and a second unit operation (18),
wherein the bioprocess installation (2) is configured to produce groups of different feedstreams (19), wherein a group of different feedstreams (19) is assigned to each unit operation, wherein the valve switching cassette (1) is configured to transfer each feedstream (19) to at least one downstream process component (9) of the respective group of downstream process components (9), wherein the bioprocess installation (2) comprises a fluid transportation device to introduce the feedstreams (19) into one or more primary ports (5) as inlet ports (20) of the fluid network (4),
**characterized in**
**that** the number of feedstreams (19) is larger than the number of inlet ports (20) and that the bioprocessing installation (2) is configured to use at least one inlet port (20) for at least two feedstreams (19).

17. Process unit for controlling a bioprocess installation (2) according to claim 16.
